# EUROPEAN PATENT APPLICATION

(11) **EP 4 510 225 A1**
(43) Date of publication of application: **19.02.2025**
(21) Application number: 23889203.8
(22) Date of filing: 10.11.2023
(51) Int. Cl.: H01M 4/36, H01M 4/48, H01M 4/62, H01M 10/052, H01M 4/02

(54) **NEGATIVE ELECTRODE ACTIVE MATERIAL, NEGATIVE ELECTRODE COMPRISING SAME, SECONDARY BATTERY COMPRISING SAME, AND METHOD FOR PRODUCING NEGATIVE ELECTRODE ACTIVE MATERIAL**

(30) Priority: 11.11.2022 KR 20220150557; 09.11.2023 KR 20230154177
(71) Applicant: LG Energy Solution, Ltd., Seoul 07335 (KR)
(72) Inventor: CHOI, Junghyun, Daejeon 34122 (KR); SHIN, Sun Young, Daejeon 34122 (KR); PARK, Heeyeon, Daejeon 34122 (KR); LEE, Yong Ju, Daejeon 34122 (KR)
(74) Representative: Hoffmann Eitle
(86) International application number: PCT/KR2023/018065
(87) International publication number: WO 2024/101947

(57) **Abstract**

The present invention relates to a negative electrode active material, a negative electrode comprising the same, a secondary battery comprising the same, and a method for producing the negative electrode active material.

## Description

### [Technical Field]

This application claims priority to and the benefit of Korean Patent Application No. 10-2022-0150557 filed in the Korean Intellectual Property Office on November 11, 2022, and Korean Patent Application No. 10-2023-0154177 filed in the Korean Intellectual Property Office on November 09, 2023, the entire contents of which are incorporated herein by reference.

The present invention relates to a negative electrode active material, a negative electrode including the same, a secondary battery including the negative electrode, and a method for manufacturing a negative electrode active material.

### [Background Art]

Recently, with the rapid spread of electronic devices using batteries, such as mobile phones, laptop computers and electric vehicles, the demand for small, lightweight, and relatively high-capacity secondary batteries is rapidly increasing. In particular, a lithium secondary battery is in the limelight as a driving power source for portable devices because it is lightweight and has a high energy density. Accordingly, research and development efforts to improve the performance of a lithium secondary battery are being actively conducted.

In general, a lithium secondary battery includes a positive electrode, a negative electrode, a separator interposed between the positive electrode and the negative electrode, an electrolyte solution, an organic solvent, and the like. In addition, the positive electrode and the negative electrode may be formed on current collectors with active material layers each including a positive electrode active material and a negative electrode active material. In general, for the positive electrode, a lithium-containing metal oxide such as LiCoO₂ and LiMn₂O₄ is used as the positive electrode active material, and for the negative electrode, a carbon-based active material or a silicon-based active material that does not contain lithium is used as the negative electrode active material.

Among the negative electrode active materials, the silicon-based active material has attracted attention in that it has higher capacity than the carbon-based active material and excellent high-speed charge characteristics. However, the silicon-based active material has disadvantages in that a degree of volume expansion/contraction during charging and discharging is high, an irreversible capacity is high, and therefore, the initial efficiency is low.

On the other hand, among the silicon-based active materials, a silicon-based oxide, specifically, a silicon-based oxide represented by SiOₓ (0<x<2) has an advantage in that the degree of volume expansion/contraction during the charging and discharging is lower as compared with other silicon-based active materials such as silicon (Si). However, the silicon-based oxide still has a disadvantage in that the initial efficiency is lowered due to the presence of irreversible capacity.

In this regard, studies have been conducted to reduce the irreversible capacity and to improve the initial efficiency by doping or intercalating metals such as Li, Al, and Mg into silicon-based oxides. However, a negative electrode slurry including a metal-doped silicon-based oxide as a negative electrode active material has a problem in that the metal oxide formed by doping metal reacts with moisture to increase pH of the negative electrode slurry and to change the viscosity. Accordingly, the state of the manufactured negative electrode is poor and the charging and discharging efficiency of the negative electrode is lowered.

Accordingly, there is a need to develop a negative electrode active material capable of improving phase stability of a negative electrode slurry including a silicon-based oxide and improving charging and discharging efficiency of a negative electrode manufactured from the slurry.

### Citation List

### Patent Literature

(Patent Literature 1) Korean Patent Application Publication No. 10-2011-0112215

### [Detailed Description of the Invention]

### [Technical Problem]

The present invention relates to a negative electrode active material, a negative electrode including the same, a secondary battery including the negative electrode, and a method for manufacturing a negative electrode active material.

### [Technical Solution]

An exemplary embodiment of the present invention provides a negative electrode active material including: a silicon-based particle including SiOₓ(0<x<2) and a Li compound; a first coating layer provided on at least a portion of the silicon-based particle; and a second coating layer provided on at least a portion of the first coating layer, wherein the first coating layer includes Li, Al, P, and O, and wherein the second coating layer includes carbon.

Another exemplary embodiment of the present invention provides a negative electrode including the negative electrode active material.

Still another exemplary embodiment of the present invention provides a secondary battery including the negative electrode.

### [Advantageous Effects]

The negative electrode active material according to an exemplary embodiment of the present invention includes a silicon-based particle including SiOₓ(0<x<2) and a Li compound; a first coating layer provided on at least a portion of the silicon-based particle; and a second coating layer provided on at least a portion of the first coating layer, wherein the first coating layer includes Li, Al, P, and O, and wherein the second coating layer includes carbon. The first coating layer including Li, Al, P, and O is provided between the silicon-based particle and the second coating layer including carbon, making it possible to reduce the reactivity of silicate that is highly reactive with bases and to easily block contact between the silicon-based particle and the outside, thereby improving the aqueous processability of slurry.

In addition, compared to an existing negative electrode active material in which a coating layer including Li, Al, P, and O is provided on a carbon layer, the hydrophobic carbon layer is present at the outermost layer, thereby additionally blocking the contact between the negative electrode active material and water to improve the aqueous processability of slurry. In addition, the highly conductive carbon is present at the outermost layer, which has an advantageous effect in implementing capacity/efficiency.

In addition, lithium by-products included in the silicon-based particle can be effectively removed during a process of forming the first coating layer, and the formed first coating layer effectively coats unreacted lithium by-products. Thereby, it is possible to prevent a phenomenon that lithium by-product or silicate in the silicon-based particle reacts with moisture of the slurry to deteriorate physical properties of the slurry. In addition, since the first coating layer includes Li, the lithium diffusion resistance on the surface of the negative electrode active material is lowered, which has the effect of improving discharge rate capability.

Accordingly, the negative electrode including the negative electrode active material according to an exemplary embodiment of the present invention, and the secondary battery including the negative electrode have effects of improving the discharge capacity, initial efficiency, resistance performance and/or life characteristics of the battery.

### [Brief Description of Drawings]

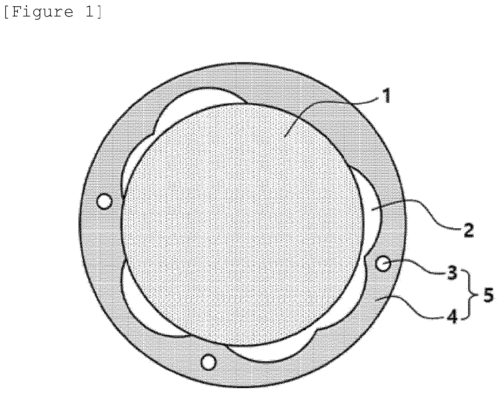

FIG. 1 schematically shows a structure of a negative electrode active material according to an exemplary embodiment of the present invention.

### <Explanation of Reference Numerals and Symbols>

1: silicon-based particle
2: first coating layer
3: phase of Li_{y}Al_{z}P_{w}Oᵥ
4: carbon
5: second coating layer

### [Best Mode]

Hereinafter, the present specification will be described in more detail.

In the present specification, when a part is referred to as "including" a certain component, it means that the part can further include another component, not excluding another component, unless explicitly described to the contrary.

Throughout the present specification, when a member is referred to as being "on" another member, the member can be in direct contact with another member or an intervening member may also be present.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms "a", "an" and "the" are intended to include the plural forms as well, unless the context clearly indicates otherwise.

In the present specification, the crystallinity of the structure included in the negative electrode active material can be confirmed through X-ray diffraction analysis, and the X-ray diffraction analysis may be performed by using an X-ray diffraction (XRD) analyzer (product name: D4-endavor, manufacturer: Bruker), or by appropriately adopting devices that are used in the art, in addition to the above device.

In the present specification, the presence or absence of elements and the contents of elements in the negative electrode active material can be confirmed through ICP analysis, and the ICP analysis may be performed using an inductively coupled plasma atomic emission spectrometer (ICPAES, Perkin-Elmer 7300).

In the present specification, the average particle diameter (D₅₀) may be defined as a particle diameter corresponding to 50% of the cumulative volume in the particle size distribution curve of the particles (graph curve of the particle size distribution). The average particle diameter (D₅₀) may be measured using, for example, a laser diffraction method. In the laser diffraction method, in general, particle diameters ranging from a submicron region to several millimeters can be measured, and results with high reproducibility and high resolvability can be obtained.

Hereinafter, preferred embodiments of the present invention will be described in detail. However, it should be understood that the embodiments of the present invention may be modified in various forms and the scope of the present invention is not limited to the embodiments described below.

### <Negative Electrode Active Material>

An exemplary embodiment of the present invention provides a negative electrode active material including: a silicon-based particle including SiOₓ(0<x<2) and a Li compound; a first coating layer provided on at least a portion of the silicon-based particle; and a second coating layer provided on at least a portion of the first coating layer, wherein the first coating layer includes Li, Al, P, and O, and wherein the second coating layer includes carbon.

The negative electrode active material according to an exemplary embodiment of the present invention includes a silicon-based particle. The silicon-based particle includes SiOₓ(0<x<2) and a Li compound.

The SiOₓ (0<x<2) may correspond to a matrix in the silicon-based particle. The SiOₓ(0<x<2) may be a form of including Si and/or SiO₂, and the Si may form a phase. For example, the SiOₓ(0<x<2) may be a composite including amorphous SiO₂ and a Si crystal. That is, x corresponds to a ratio of the number of O to Si included in the SiOₓ(0<x<2). When the silicon-based particle includes the SiOₓ(0<x<2), a discharge capacity of a secondary battery can be improved.

The Li compound may correspond to a matrix in the silicon-based composite particle. The Li compound may be present in a form of at least one of a lithium atom, lithium silicate, lithium silicide or a lithium oxide in the silicon-based particle. When the silicon-based particle includes a Li compound, the initial efficiency is improved.

The Li compound may be distributed on the surface and/or in the inside of the silicon-based particle in the form of being doped to the silicon-based particle. The Li compound may be distributed on the surface and/or in the inside of the silicon-based particle to serve to control volume expansion/contraction of the silicon-based particle to an appropriate level and to prevent damage to the active material. In addition, the Li compound may be contained, in terms of lowering a ratio of an irreversible phase (for example, SiO₂) of silicon-based oxide particle to increase the efficiency of the active material.

In an exemplary embodiment of the present invention, the Li compound may be present in a form of lithium silicate. The lithium silicate is represented by LiₐSi_{b}O_{c} (2≤a≤4, 0<b≤2, 2≤c≤5) and may be divided into crystalline lithium silicate and amorphous lithium silicate. The crystalline lithium silicate may be present in the silicon-based particles in a form of at least one lithium silicate selected from the group consisting of Li₂SiO₃, Li₄SiO₄ and Li₂Si₂O₅, and the amorphous lithium silicate may have a complex form of LiₐSi_{b}O_{c}(2≤a≤4, 0<b≤2, 2≤c≤5). However, the present invention is not limited thereto.

In an exemplary embodiment of the present invention, Li may be included in an amount of 0.1 part by weight to 40 parts by weight, or 0.1 part by weight to 25 parts by weight, on the basis of a total of 100 parts by weight of the negative electrode active material. Specifically, Li may be included in an amount of 1 part by weight to 25 parts by weight, and more specifically, 2 parts by weight to 20 parts by weight. As the Li content increases, the initial efficiency increases, but the discharge capacity decreases. Therefore, when the above range is satisfied, appropriate discharge capacity and initial efficiency can be implemented.

The content of the Li element can be confirmed through ICP analysis. Specifically, a predetermined amount (about 0.01 g) of a negative electrode active material is precisely aliquoted, transferred to a platinum crucible, and completely decomposed on a hot plate by adding nitric acid, hydrofluoric acid and sulfuric acid thereto. Then, by using an inductively coupled plasma atomic emission spectrometer (ICP-AES, Perkin-Elmer 7300), a reference calibration curve is obtained by measuring the intensity of a standard liquid, which has been prepared using a standard solution (5 mg/kg), at an intrinsic wavelength of an element to be analyzed. Subsequently, a pre-treated sample solution and a blank sample are introduced into the spectrometer, and by measuring the intensity of each component to calculate an actual intensity, calculating the concentration of each component based on the obtained calibration curve, and performing a conversion such that the sum of the calculated concentrations of the components is equal to a theoretical value, the element content of the prepared negative electrode active material can be analyzed.

In an exemplary embodiment of the present invention, the silicon-based particle may include a further metal atom. The metal atom may be present in the form of at least one of a metal atom, a metal silicate, a metal silicide and a metal oxide in the silicon-based particle. The metal atom may include at least one selected from the group consisting of Mg, Li, Al and Ca. Accordingly, initial efficiency of the negative electrode active material may be improved.

In an exemplary embodiment of the present invention, a first coating layer is provided on at least a portion of the silicon-based particle, and the first coating layer includes Li, Al, P, and O.

The first coating layer containing Li, Al, P, and O is provided on the silicon-based particle as described above, making it possible to reduce the reactivity of silicate that is highly reactive with bases and to easily block contact between the silicon-based particle and the outside, thereby improving the aqueous processability of slurry.

Specifically, the first coating layer may be in the form of being coated on at least a portion of the silicon-based particle. That is, the first coating layer may be partially coated on a surface of the particle, or may be coated on the entire surface of the particle. A shape of the first coating layer may include an island type, a thin film type, or the like, but the shape of the first coating layer is not limited thereto.

The first coating layer may be provided adjacent to the silicon-based particle. That is, the first coating layer may be coated on the silicon-based particle while being adjacent thereto. The first coating layer may be in the form of completely or partially coating the silicon-based particle.

In an exemplary embodiment of the present invention, the first coating layer may include Li, Al, P and O.

In an exemplary embodiment of the present invention, the Al may be included in an amount of 0.01 part by weight or more and 1 part by weight or less on the basis of a total of 100 parts by weight of the negative electrode active material. Specifically, Al may be included in an amount of 0.02 part by weight or more and 0.9 part by weight or less, 0.03 part by weight or more and 0.85 part by weight or less, or 0.05 part by weight or more and 0.8 part by weight or less. The lower limit of the content of Al may be 0.01 part by weight, 0.03 part by weight, 0.05 part by weight, 0.08 part by weight, 0.1 part by weight, 0.12 part by weight, or 0.15 part by weight, and the upper limit thereof may be 1 part by weight, 0.9 part by weight, 0.85 part by weight, 0.8 part by weight, 0.7 part by weight, 0.6 part by weight, or 0.5 part by weight.

In an exemplary embodiment of the present invention, the P may be included in an amount of 0.05 part by weight or more and 2.5 part by weight or less on the basis of a total of 100 parts by weight of the negative electrode active material. Specifically, P may be included in an amount of 0.1 part by weight or more and 2 parts by weight or less, 0.15 part by weight or more and 1.9 parts by weight or less, or 0.18 part by weight or more and 1.8 parts by weight or less. The lower limit of the content of P may be 0.05 part by weight, 0.1 part by weight, 0.15 part by weight, 0.18 part by weight, 0.2 part by weight, 0.25 part by weight, 0.3 part by weight, 0.35 part by weight, 0.4 part by weight, 0.45 part by weight, or 0.5 part by weight, and the upper limit thereof may be 2.5 parts by weight, 2 parts by weight, 1.8 parts by weight, 1.5 parts by weight, 1.2 parts by weight, or 1 part by weight.

In an exemplary embodiment of the present invention, Li included in the first coating layer may be included in an amount of 0.05 part by weight or more and 2 parts by weight or less on the basis of the total of 100 parts by weight of the negative electrode active material. Specifically, Li may be included in an amount of 0.1 part by weight or more and 1.5 parts by weight or less, or 0.15 part by weight or more and 1 part by weight or less. The lower limit of the content of Li included in the first coating layer may be 0.05 part by weight, 0.1 part by weight, 0.15 part by weight, 0.2 part by weight, 0.25 part by weight, 0.3 part by weight, 0.35 part by weight, 0.4 part by weight, 0.45 part by weight, or 0.5 part by weight, and the upper limit thereof may be 2 parts by weight, 1.5 parts by weight, 1.2 parts by weight, or 1 part by weight.

In an exemplary embodiment of the present invention, O included in the first coating layer may be included in an amount of 0.5 part by weight or more and 2 parts by weight or less on the basis of the total of 100 parts by weight of the negative electrode active material. Specifically, O may be included in an amount of 0.6 part by weight or more and 1.9 parts by weight or less, or 0.7 part by weight or more and 1.8 part by weight or less. The lower limit of the content of O included in the first coating layer may be 0.5 part by weight, 0.6 part by weight, or 0.7 part by weight, and the upper limit thereof may be 2 parts by weight, 1.9 parts by weight, or 1.8 parts by weight.

In an exemplary embodiment of the present invention, the first coating layer may include a phase containing Li, Al, P and O.

In an exemplary embodiment of the present invention, the first coating layer may include a phase of Li_{y}Al_{z}P_{w}Oᵥ (0<y≤10, 0<z≤10, 0<w≤10, 0<v≤10). The y, z, w and v each represent a ratio of the number of each atom.

In an exemplary embodiment of the present invention, the first coating layer may include one or more selected from the group consisting of aluminum oxide, phosphorous oxide, lithium oxide, aluminum phosphate, lithium salt, lithium phosphate, and lithium aluminate. In one example, the phase of Li_{y}Al_{z}P_{w}Oᵥ included in the first coating layer may include a mixture or a compound formed from Li₃PO₄, AlPO₄, Al(PO₃)₃, LiAlO₂ or the like, but is not limited thereto.

When the first coating layer including the components as described above is provided, it is possible to prevent a phenomenon that the Li compound included in the silicon-based particle reacts with moisture of slurry to lower viscosity of the slurry, which has the effect of improving the stability of the electrode state and/or charging and discharging capacity.

In an exemplary embodiment of the present invention, the first coating layer may include an amorphous phase. In one example, the first coating layer may be an amorphous phase. In one example, when performing an X-ray diffraction analysis on the negative electrode active material according to an exemplary embodiment of the present invention, a crystalline peak originating from the first coating layer may not appear.

In an exemplary embodiment of the present invention, the first coating layer may further include one or more selected from the group consisting of Li₂O, LiOH and Li₂CO₃. In general, during the process of doping lithium into the silicon-based particle, the remaining materials may be exposed to moisture or air to form lithium by-products such as Li₂O, LiOH and Li₂CO₃. Therefore, the first coating layer may be in a form of further including one or more selected from the group consisting of Li₂O, LiOH and Li₂CO₃.

In an exemplary embodiment of the present invention, the y may satisfy 0<y≤3.

In an exemplary embodiment of the present invention, the z may satisfy 0<z≤1.

In an exemplary embodiment of the present invention, the w may satisfy 0.5≤w≤3.

In an exemplary embodiment of the present invention, the v may satisfy 4<v≤12.

The first coating layer may be formed by dry-mixing i) a silicon-based particle and aluminum phosphate, ii) a silicon-based particle, an aluminum precursor and a phosphorous precursor, or iii) a silicon-based particle and a Li-Al-P-O-based precursor and heat-treating the mixture, or mixing i), ii) or iii) with a solvent, and then reacting the mixture while vaporizing the solvent.

In an exemplary embodiment of the present invention, the first coating layer may be included in an amount of more than 0 part by weight and 10 parts by weight or less on the basis of the total of 100 parts by weight of the negative electrode active material. Specifically, the first coating layer may be included in an amount of 0.1 part by weight or more and 10 parts by weight or less, 0.3 part by weight or more and 8 parts by weight or less, or 0.4 part by weight or more and 5 parts by weight or less. If the content of the first coating layer is below the above range, it is difficult to prevent gas generation in the slurry, and if the content is above the above range, it is difficult to implement the capacity or efficiency.

The upper limit of the content of the first coating layer may be 10 parts by weight, 8 parts by weight, 6 parts by weight, 5 parts by weight, 4 parts by weight, 3.5 parts by weight, 3 parts by weight, or 2 parts by weight, and the lower limit thereof may be 0.1 part by weight, 0.3 part by weight, 0.4 part by weight, 0.5 part by weight, 0.8 part by weight, 1 part by weight, 1.2 parts by weight, 1.4 parts by weight, or 1.5 parts by weight.

In an exemplary embodiment of the present invention, a second coating layer may be provided on at least a portion of the first coating layer, and the second coating layer includes carbon.

Specifically, the second coating layer may be coated on at least a portion of the surface of the first coating layer, that is, may be partially coated on the surface of the first coating layer, or may be coated on the entire surface of the first coating layer. A shape of the second coating layer may include an island type, a thin film type, or the like, but the shape of the second coating layer is not limited thereto.

Conductivity is imparted to the negative electrode active material by the second coating layer including the carbon, so that the initial efficiency, life characteristics, and battery capacity characteristics of a secondary battery can be improved.

The second coating layer may be provided adjacent to the first coating layer. That is, the second coating layer is coated adjacent to the first coating layer, and thus may be provided in the form of the particle including SiOₓ (0<x<2) and a Li compound-the first coating layer-the second coating layer. The second coating layer may be in the form of completely or partially coating the first coating layer.

Additionally, the second coating layer may be further provided on a region, in which the first coating layer is not provided, of the surface of the silicon-based particle. That is, the second coating layer is coated adjacent to a portion, on which the first coating layer is not coated, of the surface of the silicon-based particle, and thus may be provided in the form of the silicon-based particle-the second coating layer.

The second coating layer may be in the form of being coated on at least a portion of the silicon-based particle. That is, the second coating layer may be partially coated on the surface of the silicon-based particle.

In an exemplary embodiment of the present invention, the second coating layer may include amorphous carbon. In addition, the second coating layer may further include crystalline carbon.

The crystalline carbon may further improve conductivity of the negative electrode active material. The crystalline carbon may include at least one selected from the group consisting of fullerene, carbon nanotubes, and graphene.

The amorphous carbon may appropriately maintain the strength of the carbon layer to suppress expansion of the silicon-based particle. The amorphous carbon may be a carbide of at least one substance selected from the group consisting of tar, pitch, and other organic materials, or may be a carbon-based material formed by using a hydrocarbon as a source of chemical vapor deposition.

The carbide of the other organic materials may be a carbide of an organic substance selected from sucrose, glucose, galactose, fructose, lactose, mannose, ribose, aldohexose or ketohexose carbide, and combinations thereof.

The hydrocarbon may be a substituted or unsubstituted aliphatic or alicyclic hydrocarbon or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane or the like. The aromatic hydrocarbon of the substituted or unsubstituted aromatic hydrocarbon may be benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment of the present invention, the second coating layer may be an amorphous carbon layer.

In an exemplary embodiment of the present invention, the second coating layer may further include Li, Al, P, and O. Specifically, the second coating layer may be a carbon layer further including Li, Al, P, and O.

In an exemplary embodiment of the present invention, the second coating layer may further include a phase containing Li, Al, P, and O. That is, the second coating layer is a carbon layer, and may have a structure that further includes a phase containing Li, Al, P, and O inside the carbon layer.

Specifically, the second coating layer may be in the form of further including a phase of Li_{y}Al_{z}P_{w}Oᵥ (0<y≤10, 0<z≤10, 0<w≤10, 0<v≤10).

The phase of Li_{y}Al_{z}P_{w}Oᵥ included in the second coating layer may be the same as the phase of Li_{y}Al_{z}P_{w}Oᵥ included in the first coating layer. That is, during a process of coating the carbon layer on the silicon-based particle, the components of the first coating layer may be mixed together and coated, or during a process of forming the first coating layer and then proceeding with the carbon coating, the components (for example, Li_{y}Al_{z}P_{w}Oᵥ phase) of the first coating layer may be included in the carbon layer, and thus the second coating layer having the Li_{y}Al_{z}P_{w}Oᵥ phase included in the carbon layer may be formed.

In an exemplary embodiment of the present invention, the content of carbon may be 70 parts by weight or more on the basis of 100 parts by weight of the second coating layer. Specifically, the content of the carbon may be 80 parts by weight or more, 90 parts by weight or more, 95 parts by weight or more, or 98 parts by weight or more. As described above, the components of the first coating layer may be included during the process of forming the second coating layer, so a small amount of components of the first coating layer may be included in the second coating layer.

In an exemplary embodiment of the present specification, the second coating layer may be provided on the outermost layer of the negative electrode active material. Specifically, a carbon component in the second coating layer may be provided on the outermost layer of the negative electrode active material. When carbon is present in the outermost layer of the negative electrode active material as described above, the hydrophobicity of carbon acts more effectively than in a case where carbon is not present in the outermost layer of the negative electrode active material, so contact between the negative electrode active material and water is additionally blocked to further improve the aqueous processability of slurry. In addition, there is an advantageous effect in implementing capacity/efficiency due to the conductivity of carbon.

In an exemplary embodiment of the present invention, the second coating layer may be included in an amount of 0.1 part by weight to 50 parts by weight on the basis of the total of 100 parts by weight of the negative electrode active material. Specifically, the second coating layer may be included in an amount of 1 part by weight to 30 parts by weight, 2 parts by weight to 20 parts by weight, 3 parts by weight to 10 parts by weight, or 3 parts by weight to 8 parts by weight. When the above range is satisfied, reduction in capacity and efficiency of the negative electrode active material can be prevented.

The upper limit of the content of the second coating layer may be 50 parts by weight, 40 parts by weight, 30 parts by weight, 20 parts by weight, 15 parts by weight, 10 parts by weight, 8 parts by weight, 7 parts by weight, 6 parts by weight, or 5 parts by weight, and the lower limit thereof may be 0.1 part by weight, 1 part by weight, 2 parts by weight, 3 parts by weight, or 4 parts by weight.

In an exemplary embodiment of the present invention, carbon included in the negative electrode active material may be included in an amount of 0.1 part by weight to 50 parts by weight, 0.1 part by weight to 30 parts by weight, or 0.1 part by weight to 20 parts by weight on the basis of the total of 100 parts by weight of the negative electrode active material. More specifically, carbon may be included in an amount of 0.5 part by weight to 15 parts by weight, 1 part by weight to 10 parts by weight, 1 part by weight to 8 parts by weight, or 1 part by weight to 5 parts by weight. When the above range is satisfied, reduction in capacity and efficiency of the negative electrode active material can be prevented. The upper limit of the content of carbon included in the negative electrode active material may be 50 parts by weight, 40 parts by weight, 30 parts by weight, 20 parts by weight, 10 parts by weight, 8 parts by weight, 6 parts by weight, or 5 parts by weight, and the lower limit thereof may be 0.1 part by weight, 1 part by weight, 2 parts by weight, 3 parts by weight, or 4 parts by weight.

In an exemplary embodiment of the present invention, a thickness of the second coating layer may be 1 nm to 500 nm, and specifically 5 nm to 300 nm. When the above range is satisfied, the conductivity of the negative electrode active material is improved, the change in volume of the negative electrode active material is easily suppressed, and the side reaction between the electrolyte solution and the negative electrode active material is suppressed, thereby improving the initial efficiency and/or life of the battery.

Specifically, the second coating layer may be formed by chemical vapor deposition (CVD) using at least one hydrocarbon gas selected from the group consisting of methane, ethane and acetylene.

In an exemplary embodiment of the present invention, the phase of Li_{y}Al_{z}P_{w}Oᵥ (0<y≤10, 0<z≤10, 0<w≤10, 0<v≤10) may be included in an amount of 0.1 part by weight or more and 30 parts by weight or less on the basis of the total of 100 parts by weight of the negative electrode active material. Specifically, the phase may be included in an amount of 0.1 part by weight or more and 20 parts by weight or less, 0.2 part by weight or more and 15 parts by weight or less, 0.3 part by weight or more and 10 parts by weight or less, or 0.4 part by weight or more and 8 parts by weight or less. The lower limit of the content of the phase of Li_{y}Al_{z}P_{w}Oᵥ may be 0.1 part by weight, 0.2 part by weight, 0.3 part by weight, 0.4 part by weight, or 0.5 part by weight, and the upper limit thereof may be 30 parts by weight, 20 parts by weight, 15 parts by weight, 10 parts by weight, 8 parts by weight, 7 parts by weight, 6 parts by weight, 5 parts by weight, 4 parts by weight, 3 parts by weight, or 2 parts by weight. When the content of the phase of Li_{y}Al_{z}P_{w}Oᵥ satisfies the above range as described above, it is possible to reduce the reactivity of silicate that is highly reactive with bases and to easily block contact between the silicon-based particle and the outside, thereby improving the aqueous processability of slurry. On the other hand, if the content exceeds the above range, it has a negative effect on electrical conductivity, making it difficult to implement capacity/efficiency during charging and discharging, and if the content is below the above range, the reactivity of silicate cannot be lowered, making it difficult to improve the aqueous processability of slurry.

In the present invention, the crystallinity of carbon in the second coating layer can be confirmed by calculating the D/G band ratio according to Raman spectroscopy. Specifically, measurements can be made using a Renishaw 2000 Raman microscope system and 532 nm laser excitation, and using a 100x optical lens with a low laser power density and an exposure time of 30 seconds in order to avoid a laser heat effect. In order to reduce a deviation depending on position, a total of 25 points can be determined for a region of 5 µm × 5 µm, and fitted using the Lorentzian function. Thereafter, average values of the D band and G band can be calculated.

FIG. 1 schematically shows a structure of a negative electrode active material according to an exemplary embodiment of the present invention, showing a configuration of a silicon-based particle 1, a first coating layer 2, and a second coating layer 5. Specifically, the first coating layer 2 may be provided on the silicon-based particle 1, and the second coating layer 5 may be provided on the first coating layer 2. In this case, the second coating layer 5 contains carbon 4, and may further include a phase 3 of Li_{y}Al_{z}P_{w}Oᵥ therein.

In an exemplary embodiment of the present invention, the content of carbon may be 45 parts by weight or more and 95 parts by weight or less on the basis of a total of 100 parts by weight of the first coating layer and the second coating layer. Specifically, the content of carbon may be 48 parts by weight or more and 93 part by weight or less, 49 parts by weight or more and 92 parts by weight or less, 50 parts by weight or more and 91 parts by weight or less, more than 50 parts by weight and 90 parts by weight or less, 60 parts by weight or more and 85 parts by weight or less, or 70 parts by weight or more and 80 parts by weight or less. As described above, when carbon is included in an amount of 45 parts by weight or more in the entire coating layer, the hydrophobic carbon layer is present at the outermost layer, which can additionally block contact with water to improve aqueous processability of slurry. In addition, the highly conductive carbon is present at the outermost layer, which has an advantageous effect in implementing capacity/efficiency. On the other hand, if the content of carbon is below the above range, it is difficult to improve the aqueous processability of slurry because the contact between the negative electrode active material and water cannot be effectively blocked, and if the content of carbon exceeds the above range, the material becomes excessively hydrophobic, thereby causing a problem of low dispersibility when producing aqueous slurry.

In an exemplary embodiment of the present invention, a weight ratio of the first coating layer and the second coating layer may be 1:0.5 to 1:30. Specifically, the weight ratio may be 1:0.5 to 1:20, 1:0.5 to 1:15, 1:1 to 1:15, 1:2 to 1:10, or 1:3 to 1:5. By satisfying the above range, the first coating layer and the second coating layer can effectively coat the silicon-based particle, thereby effectively suppressing side reactions in the slurry and stably implementing capacity and/or efficiency. On the other hand, if the content of the first coating layer is excessively higher than that of the second coating layer, it is difficult to implement capacity or efficiency, and if the content of the second coating layer is excessively higher than that of the first coating layer, it is difficult to prevent gas generation in the slurry.

In an exemplary embodiment of the present invention, the first coating layer may be included in an amount of 5 parts by weight or more and 150 parts by weight or less on the basis of 100 parts by weight of the second coating layer. Specifically, the first coating layer may be included in an amount of 120 parts by weight or less, 110 parts by weight or less, 100 parts by weight or less, 90 parts by weight or less, 80 parts by weight or less, 70 parts by weight or less, 60 parts by weight or less, or 50 parts by weight or less on the basis of 100 parts by weight of the second coating layer. In addition, the first coating layer may be included in an amount of 5 parts by weight or more, 8 parts by weight or more, 10 parts by weight or more, or 20 parts by weight or more on the basis of 100 parts by weight of the second coating layer. By satisfying the above range, the first coating layer and the second coating layer can effectively coat the silicon-based particle, thereby effectively suppressing side reactions in the slurry and stably implementing capacity and/or
efficiency.

In an exemplary embodiment of the present invention, a lithium by-product may be present on the silicon-based particle. Specifically, the lithium by-product may be present between the silicon-based particle and the first coating layer, in the first coating layer, or on the first coating layer. In addition, the lithium by-product may be present between the silicon-based particle and the second coating layer.

Specifically, the lithium by-product may refer to a lithium compound remaining near the surface of the silicon-based particle or the carbon layer after the silicon-based particle is manufactured.

The lithium by-product may include one or more selected from the group consisting of Li₂O, LiOH and Li₂CO₃.

Whether or not the lithium by-product exists can be confirmed through X-ray diffraction analysis (XRD) or X-ray photoelectron analysis (XPS).

The lithium by-product may be included in an amount of 5 parts by weight or less on the basis of a total of 100 parts by weight of the negative electrode active material. Specifically, the lithium by-product may be included in an amount of 0.01 part by weight to 5 parts by weight, 0.05 part by weight to 2 parts by weight, or 0.1 part by weight to 1 part by weight. More specifically, the lithium by-product may be included in an amount of 0.1 part by weight to 0.8 part by weight or 0.1 part by weight to 0.5 part by weight. When the content of the lithium by-product satisfies the above range, the side reaction in the slurry can be reduced and the change in viscosity can be reduced, thereby improving the aqueous processability characteristics. On the other hand, when the content of the lithium by-product is higher than the above range, the slurry becomes basic when formed, which causes a side reaction or a change in viscosity and problems in the aqueous processability.

The content of the lithium by-product can be calculated by measuring an amount of a HCl solution in a specific section where pH changes in a process of titrating an aqueous solution including the negative electrode active material with the HCl solution using a titrator, and then calculating an amount of the lithium by-product.

An average particle diameter (D₅₀) of the negative electrode active material may be 0.1 um to 30 um, specifically 1 um to 20 µm, and more specifically 1 um to 10 um. When the above range is satisfied, the structural stability of the active material is ensured during charging and discharging, a problem that the level of volume expansion/contraction increases as the particle diameter becomes excessively large can be prevented, and a problem that the initial efficiency is reduced when the particle diameter is excessively small can also be prevented.

The BET specific surface area of the negative electrode active material may be 1 m²/g to 100 m²/g, specifically, 1 m²/g to 70 m²/g, and more specifically, 1 m²/g to 50 m²/g, for example, 2 m²/g to 30 m²/g. When the above range is satisfied, side reactions between the electrolyte solution and the negative electrode active material can be reduced during charging and discharging of the battery, and thus the life characteristics of the battery can be improved.

### <Method for Manufacturing Negative Electrode Active Material>

An exemplary embodiment of the present invention provides a method for manufacturing a negative electrode active material, the method including: manufacturing a preliminary silicon-based particle including SiOₓ(0<x<2); manufacturing a silicon-based particle by mixing the preliminary silicon-based particle and a Li precursor and heat-treating the mixture; providing a first coating layer by mixing and reacting the silicon-based particle with one or more selected from the group consisting of an Al precursor, a P precursor, and a precursor including Al and P; and forming a second coating layer from a carbon precursor on the silicon-based particle provided with the first coating layer.

When manufacturing a negative electrode active material by the above-described method, after forming the first coating layer including Li, Al, P, and O on the silicon-based particle, the second coating layer including carbon may be formed on the silicon-based particle formed with the first coating layer by a chemical vapor deposition (CVD) method, or the like.

The preliminary silicon-based particle may be manufactured by heating Si powder and SiO₂ powder in a vacuum to vaporize the same and then depositing the vaporized mixed gas.

The Si powder and the SiO₂ powder may be included at a weight ratio of 2:8 to 8:2, and specifically, may be included at a weight ratio of 4:6 to 6:4 or 5:5.

Specifically, a mixed powder of the Si powder and the SiO₂ powders may be heat-treated under vacuum at 1300°C to 1800°C, 1400°C to 1800°C, or 1400°C to 1600°C.

The mixed gas vaporized through the heat treatment can be cooled under vacuum and deposited into a solid phase. Additionally, the preliminary silicon-based particle can be manufactured by heat-treating the deposited solid phase in an inert atmosphere. The heat treatment may be performed at 500°C to 1000°C, or 700°C to 900°C.

The formed preliminary silicon-based particle may be present in the form of SiOₓ (x=1).

Next, the preliminary silicon-based particle and the Li precursor are mixed and then heat-treated to manufacture a silicon-based particle including the Li compound (doped with Li). The Li precursor may be, for example, Li powder.

The step of mixing the preliminary silicon-based particle and Li powder and performing heat treatment may be performed at 700°C to 900°C for 4 hours to 6 hours, and specifically at 800°C for 5 hours.

The silicon-based particle formed through the heat treatment includes SiOₓ (0<x<2) and a Li compound.

The silicon-based particle may include, as the Li compound described above, a Li silicate, a Li silicide, a Li oxide, or the like.

The particle size of the silicon-based particle may be further adjusted through a method such as a ball mill, a jet mill, or an air classification, but the present invention is not limited thereto.

A lithium compound (lithium by-product) is provided on at least a portion of the surface of the silicon-based particle, as described above. Specifically, in the processes of forming a preliminary silicon-based particle including the SiOx (0<x<2), and doping Li to manufacture the silicon-based particle described above, a lithium compound, i.e., a lithium by-product formed due to unreacted lithium remains near the surface of the silicon-based particle.

Next, a first coating layer may be provided on at least a portion of the silicon-based particle including the Li compound.

The step of providing the first coating layer on at least a portion of the silicon-based particle may include mixing and reacting the silicon-based particle with one or more selected from the group consisting of an Al precursor, a P precursor, and a precursor including Al and P.

In an exemplary embodiment, the step of providing a first coating layer on at least a portion of the silicon-based particle may include mixing and reacting the silicon-based particle with a precursor including Al and P.

The precursor including Al and P may be included in an amount of 0.1 part by weight to 5 parts by weight on the basis of a total of 100 parts by weight of the mixture. Specifically, the precursor may be included in an amount of 0.5 part by weight to 4 parts by weight, or 1 part by weight to 3 parts by weight.

The precursor including Al and P may be aluminum phosphate.

Specifically, the first coating layer may be formed on at least a portion of the silicon-based particle by i) dry-mixing the silicon-based particle and aluminum phosphate and heat-treating the mixture, or ii) mixing the silicon-based particle and aluminum phosphate with a solvent, and then reacting the silicon-based particle and aluminum phosphate while vaporizing the solvent through heat treatment. When forming a first coating layer using the above method, the first coating layer can be easily formed by reacting aluminum phosphate with a lithium by-product formed or remaining during the manufacturing process of the silicon-based particle.

The aluminum phosphate may be in a form of Al_{b}P_{c}O_{d} (0<b≤10, 0<c≤10, 0<d≤10). Specifically, the aluminum phosphate may be Al(PO₃)₃ or AlPO₄, but is not limited thereto, and salts that are used in the art may be appropriately adopted to form the first coating layer.

In another exemplary embodiment, the step of providing a first coating layer on at least a portion of the silicon-based particle may include mixing and reacting the silicon-based particle with a precursor including Al (aluminum precursor) and a precursor including P (phosphorous precursor).

Specifically, the first coating layer may be formed on at least a portion of the silicon-based particle by iii) dry-mixing the silicon-based particle, the aluminum precursor, and the phosphorus precursor and heat-treating the mixture, or iv) mixing the silicon-based particle, the aluminum precursor, and the phosphorus precursor with a solvent, and then reacting the silicon-based particle, the aluminum precursor, and the phosphorus precursor while vaporizing the solvent through heat treatment. When forming the first coating layer by the above method, the first coating layer can be easily formed by reacting the lithium by-product formed during the manufacturing process of silicon-based particle, the aluminum precursor, and the phosphorus precursor.

The aluminum precursor may be aluminum oxide in the form of AlₐO_{b} (0 <a≤10, 0<b≤10), and specifically, may be Al₂O₃.

Alternatively, the aluminum precursor may be aluminum hydroxide, aluminum nitrate, aluminum sulfate, or the like, and specifically, may be Al(OH)₃, Al(NO₃)₃·9H₂O or Al₂(SO₄)₃, but is not limited thereto, and aluminum precursors that are used in the art may be appropriately adopted to form the first coating layer.

The phosphorus precursor may be phosphorous oxide in the form of P_{c}O_{d} (0<c≤10, 0<d≤10).

Alternatively, the phosphorus precursor may be ammonium phosphate, diammonium phosphate, phosphoric acid, or the like, and specifically, may be (NH₄)₃PO₄, (NH₄)₂HPO₄, H₃PO₄ or NH₄H₂PO₄, but is not limited thereto, and phosphorus precursors that are used in the art may be appropriately adopted to form the first coating layer.

In another exemplary embodiment, the step of providing a first coating layer on at least a portion of the silicon-based particle may include mixing and reacting the silicon-based particle with a precursor including Li, Al, P, and O (Li-Al-P-O-based precursor).

Specifically, the first coating layer may be formed on at least a portion of the silicon-based particle by v) dry-mixing the silicon-based particle and the Li-Al-P-O-based precursor and heat-treating the mixture, or vi) mixing the silicon-based particle and the Li-Al-P-O-based precursor with a solvent, and then reacting the silicon-based particle and the Li-Al-P-O-based precursor while vaporizing the solvent through heat treatment. When forming the first coating layer using the above method, the first coating layer can be formed by directly adding the Li-Al-P-O-based precursor.

The Li-Al-P-O-based precursor may be in a form of Li_{y}Al_{z}P_{w}Oᵥ (0<y≤10, 0<z≤10, 0<w≤10, 0<v≤10). Specifically, the Li-Al-P-O-based precursor may be a mixture or compound formed complexly from Li₃PO₄, AlPO₄, Al(PO₃)₃, LiAlO₂ or the like, but is not limited thereto, and configurations that are used in the art may be appropriately adopted to form the first coating layer.

In the step of providing a first coating layer on at least a portion of the silicon-based particle, the heat treatment may be performed at 500°C to 700°C, and specifically 550°C to 650°C. However, the heat treatment is not limited thereto, and may differ depending on the salt or precursor used. If the heat treatment temperature is higher than the above range, the first coating layer is formed in a crystalline form, making it difficult for Li ions to enter and exit through the first coating layer, thereby reducing resistance and life characteristics and lowering capacity and/or efficiency. When the heat treatment temperature satisfies the above range, the reaction between the salt or precursor and the Li by-product occurs well and the first coating layer includes Li, so the durability of the formed negative electrode active material against moisture increases, and a lithium diffusion resistance on the surface of the negative electrode active material is lowered, which has an effect of improving discharge rate capability.

In the step of providing a first coating layer on at least a portion of the silicon-based particle, the heat treatment temperature is preferably lower than the temperature at which the preliminary silicon-based particle and the Li precursor are mixed and then heat treated.

The solvent may be water or ethanol, but is not limited thereto, and a solvent used in the art may be appropriately adopted.

The first coating layer formed on the silicon-based particle preferably includes a phase of Li_{y}Al_{z}P_{w}Oᵥ (0 <y≤10, 0<z≤10, 0<w≤10, 0<v≤10), and the phase of Li_{y}Al_{z}P_{w}Oᵥ may be an amorphous phase.

Details of the first coating layer are the same as described above.

Next, a second coating layer may be provided on the surface of the silicon-based particle.

The second coating layer may be a carbon layer, and the carbon layer may be formed by using chemical vapor deposition (CVD) in which a carbon-based material, for example, hydrocarbon gas is used or by carbonizing a material serving as a carbon source.
Specifically, the carbon layer may be formed by putting the formed preliminary particle into a reactor, and then depositing hydrocarbon gas at 500°C to 1200°C by chemical vapor deposition (CVD). The hydrocarbon gas may be at least one hydrocarbon gas selected from the group consisting of methane, ethane, propane and acetylene, and may be heat-treated at 500°C to 900°C.

The heat treatment temperature during the chemical vapor deposition is preferably lower than the temperature at which the preliminary silicon-based particle and the Li precursor are mixed and then heat treated.

Another exemplary embodiment of the present invention provides a method for manufacturing a negative electrode active material, the method including: manufacturing a preliminary silicon-based particle including SiOx (0<x<2); manufacturing a silicon-based particle by mixing the preliminary silicon-based particle and a Li precursor and heat-treating the mixture; and mixing the silicon-based particle with one or more selected from the group consisting of an Al precursor, a P precursor, and a precursor including Al and P, and a carbon source, and heat-treating the mixture.

When manufacturing a negative electrode active material by the above-described method, the precursors (Al precursor, P precursor, and precursor including Al and P) of the first coating layer and the precursor (carbon source) of the second coating layer are mixed and then carbonized by heat treatment, whereby a first coating layer and a second coating layer may be formed simultaneously on the silicon-based particle.

The above details may be applied to the silicon-based particle, the Al precursor, the P precursor, the precursor including Al and P, and the carbon source.

In the step of mixing one or more selected from the group consisting of the Al precursor, the P precursor, and the precursor including Al and P, and the carbon source and heat-treating the mixture, the heat treatment temperature is preferably lower than the temperature at which the preliminary silicon-based particle and the Li precursor are mixed and then heat treated.

Specifically, the heat treatment may be performed at 500°C to 700°C, and more specifically, 550°C to 650°C. However, the heat treatment is not limited thereto, and may differ depending on the salt or precursor used. If the heat treatment temperature is higher than the above range, the first coating layer and the second coating layer are formed in a crystalline form, making it difficult for Li ions to enter and exit through the first and second coating layers, thereby reducing resistance and life characteristics and lowering capacity and/or efficiency.

### <Negative Electrode>

A negative electrode according to an exemplary embodiment of the present invention may include the negative electrode active material described above.

Specifically, the negative electrode may include a negative electrode current collector and a negative electrode active material layer arranged on the negative electrode current collector. The negative electrode active material layer may include the negative electrode active material. Furthermore, the negative electrode active material layer may further include a binder a thickener and/or a conductive material.

The negative electrode active material layer may be formed by applying a negative electrode slurry including a negative electrode active material, a binder, a thickener, and/or a conductive material to at least one surface of a current collector, and drying and roll-pressing the same.

The negative electrode slurry may further include an additional negative electrode active material.

As the additional negative electrode active material, a compound capable of reversible intercalation and deintercalation of lithium may be used. Specific examples include a carbonaceous material such as artificial graphite, natural graphite, graphitized carbon fiber, and amorphous carbon; a metallic substance capable of being alloyed with lithium, such as Si, Al, Sn, Pb, Zn, Bi, In, Mg, Ga, Cd, Si alloys, Sn alloys, or Al alloys; metallic oxides capable of doping and undoping lithium, such as SiO_{β} (0<β<2), SnO₂, vanadium oxide, lithium titanium oxide, and lithium vanadium oxide; or a composite including the metallic substance and the carbonaceous material, such as a Si-C composite or a Sn-C composite, and any one thereof or a mixture of two or more thereof may be used. In addition, a metal lithium thin film may be used as the negative electrode active material. In addition, both low-crystalline carbon and high-crystalline carbon may be used as the carbon material. Representative examples of the low-crystalline carbon include soft carbon and hard carbon, and representative examples of the high-crystalline carbon include amorphous, platy, scaly, spherical or fibrous natural graphite or artificial graphite, kish graphite, pyrolytic carbon, mesophase pitch based carbon fiber, meso-carbon microbeads, mesophase pitches, and high-temperature fired carbon such as petroleum- or coal tar pitch-derived cokes.

The additional negative electrode active material may be a carbon-based negative electrode active material.

In an exemplary embodiment of the present invention, a weight ratio of the negative electrode active material and the additional negative electrode active material included in the negative electrode slurry may be 10:90 to 90:10, and specifically 10:90 to 50:50.

The negative electrode slurry may include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

The negative electrode slurry including the negative electrode active material according to an exemplary embodiment of the present invention may have pH of 7 to 11 at 25°C. When pH of the negative electrode slurry satisfies the above range, the rheological properties of the slurry are stabilized. On the other hand, when pH of the negative electrode slurry is less than 7 or pH of the negative electrode slurry exceeds 11, carboxymethylcellulose (CMC) used as a thickener is decomposed, resulting in lowering in viscosity of the slurry and a decrease in dispersion degree of the active material included in the slurry.

The negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 6 um to 20 um. However, the thickness of the current collector is not limited thereto.

The binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

The thickener may be carboxymethylcellulose (CMC), but is not limited thereto, and thickeners used in the art may be appropriately adopted.

In an exemplary embodiment of the present invention, a weight ratio of the negative electrode active material and the additional negative electrode active material included in the negative electrode slurry may be 1:99 to 30:70, and specifically 5:95 to 30:70 or 10:90 to 20:80.

In an exemplary embodiment of the present invention, the entire negative electrode active materials included in the negative electrode slurry may be included in an amount of 60 parts by weight to 99 parts by weight, and specifically 70 parts by weight to 98 parts by weight on the basis of a total of 100 parts by weight of solid content of the negative electrode slurry.

In an exemplary embodiment of the present invention, the binder may be included in an amount of 0.5 part by weight to 30 parts by weight, and specifically 1 part by weight to 20 parts by weight, on the basis of the total of 100 parts by weight of the solid content of the negative electrode slurry.

In an exemplary embodiment of the present invention, the conductive material may be included in an amount of 0.5 part by weight to 25 parts by weight, specifically 1 part by weight to 20 parts by weight on the basis of the total of 100 parts by weight of the solid content of the negative electrode slurry.

In an exemplary embodiment of the present invention, the thickener may be included in an amount of 0.5 part by weight to 25 parts by weight, specifically 0.5 part by weight to 20 parts by weight, and more specifically 1 part by weight to 20 parts by weight on the basis of the total of 100 parts by weight of the solid content of the negative electrode slurry.

The negative electrode slurry according to an exemplary embodiment of the present invention may further include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

In an exemplary embodiment of the present invention, a solid content of the negative electrode slurry may be 20 parts by weight to 75 parts by weight, and specifically 30 parts by weight to 70 parts by weight on the basis of a total of 100 parts by weight of the negative electrode slurry.

### <Secondary Battery>

A secondary battery according to an exemplary embodiment of the present invention may include the negative electrode according to an exemplary embodiment of the present invention described above. Specifically, the secondary battery may include a negative electrode, a positive electrode, a separator interposed between the positive electrode and the negative electrode, and an electrolyte solution, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 um, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li_{1+c1}Mn_{2-c1}O₄ (0≤c1≤0.33), LiMnO₃, LiMn₂O₃ and LiMnO₂; a lithium copper oxide (Li₂CuO₂); a vanadium oxide such as LiV₃O₈, V₂O₅ and Cu₂V₂O₇; a Ni-site type lithium nickel oxide represented by chemical formula LiNi_{1-c2}M_{c2}O₂ (where M is at least one selected from the group consisting of Co, Mn, Al, Cu, Fe, Mg, B, and Ga, and satisfies 0.01≤c2≤0.5); a lithium manganese composite oxide represented by chemical formula LiMn_{2-c3}M_{c3}O₂ (where M is at least one selected from the group consisting of Co, Ni, Fe, Cr, Zn and Ta, and satisfies 0.01≤c3≤0.1) or Li₂Mn₃MO₈ (where M is at least one selected from the group consisting of Fe, Co, Ni, Cu and Zn); LiMn₂O₄ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidenefluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte solution as well as a low resistance to the movement of electrolyte solution ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte solution may include an organic liquid electrolyte, an inorganic liquid electrolyte, a solid polymer electrolyte, a gel-type polymer electrolyte, a solid inorganic electrolyte, a molten-type inorganic electrolyte and the like that may be used in the manufacturing of the lithium secondary battery, but are not limited thereto.

Specifically, the electrolyte solution may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte solution with high electric conductivity may be prepared, and therefore, may be more preferably used.

A lithium salt may be used as the metal salt, and the lithium salt is a material that is readily soluble in the non-aqueous electrolyte solution, in which, for example, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN- and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte solution for the purpose of improving life characteristics of the battery, suppressing a decrease in battery capacity, improving discharge capacity of the battery, and the like, in addition to the above-described electrolyte solution components.

Another exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

### Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

### <Examples and Comparative Examples>

### Example 1

100 g of powder of Si and SiO₂ mixed in a molar ratio of 1:1 was vacuum-heated to a sublimation temperature of 1,400°C in a reactor. Then, a mixed gas of vaporized Si and SiO₂ was reacted in a cooling zone in a vacuum state where a cooling temperature was 800°C, and condensed into a solid phase. Thereafter, heat treatment was performed in an inert atmosphere and at a temperature of 800°C to prepare preliminary silicon-based particles. Then, the preliminary silicon-based particles were added and pulverized for 3 hours to prepare silicon-based particles having a size of 6 um (D₅₀) by using 15 sus ball media added for ball mill.

10 g of Li metal powder was added to 90 g of the silicon-based particles, which were then subjected to heat treatment in an inert atmosphere and at the temperature of 800°C, resulting in Li-doped silicon-based particles.

98.5 g of the Li-doped silicon-based particles were mixed with 1.5 g of Al(PO₃)₃, and the mixture was subjected to heat treatment at 600°C to prepare silicon-based particles in which a first coating layer including Li, Al, and P was formed on surfaces of the silicon-based particles.

Thereafter, the silicon-based particles on which the first coating layer was formed were positioned in a hot zone of a CVD apparatus while maintaining the inert atmosphere by causing Ar gas to flow, and a reaction was carried out at 10⁻¹ torr for 20 minutes while blowing methane into the hot zone of 700°C using Ar as a carrier gas, thereby forming a second coating layer (carbon layer) on the surfaces of the silicon-based particles.

The D₅₀ of the negative electrode active material was 6 um, and the BET specific surface area was 2.5 m²/g.

The negative electrode active material included the first coating layer including Li, Al, P and O between the silicon-based particle and the second coating layer including carbon, and as a result of ICP analysis on the negative electrode active material, the contents of Li, Al, and P were 9.5 wt%, 0.15 wt%, and 0.5 wt%, respectively, based on a total of 100 wt% of the negative electrode active material.

### Example 2

A negative electrode active material was prepared in the same manner as in Example 1, except that 95 g of Li-doped silicon-based particles were mixed with 5 g of Al(PO₃)₃ and the mixture was heat-treated.

As a result of ICP analysis on the negative electrode active material, the contents of Li, Al, and P were 9.0 wt%, 0.5 wt%, and 1.8 wt%, respectively, based on a total of 100 wt% of the negative electrode active material.

### Example 3

A negative electrode active material was prepared in the same manner as in Example 1, except that 99.5 g of Li-doped silicon-based particles were mixed with 0.5 g of Al(PO₃)₃ and the mixture was heat-treated.
As a result of ICP analysis on the negative electrode active material, the contents of Li, Al, and P were 9.5 wt%, 0.05 wt%, and 0.18 wt%, respectively, based on a total of 100 wt% of the negative electrode active material.

### Comparative Example 1

A negative electrode active material was prepared in the same manner as in Example 1, except that a carbon layer was first formed on the surfaces of the silicon-based particles before doping the silicon-based particles with Li.

In the case of the negative electrode active material of Comparative Example 1, a coating layer including Li, Al, P, and O was formed after forming the carbon layer, whereby the coating layer was formed in the opposite order to those of Examples 1 to 3.

As a result of ICP analysis on the negative electrode active material, the contents of Li, Al, and P were 9.5 wt%, 0.15 wt%, and 0.5 wt%, respectively, based on a total of 100 wt% of the negative electrode active material.

### Comparative Example 2

A negative electrode active material was prepared in the same manner as in Comparative Example 1, except that 90 g of Li-doped silicon-based particles were mixed with 10 g of Al(PO₃)₃ and the mixture was heat-treated.

As a result of ICP analysis on the negative electrode active material, the contents of Li, Al, and P were 9.0 wt%, 1.0 wt%, and 3.0 wt%, respectively, based on a total of 100 wt% of the negative electrode active material.

### Comparative Example 3

A negative electrode active material was prepared in the same manner as in Example 1, except that the second coating layer was not formed.

### Comparative Example 4

10 g of Li metal powder was added to 90 g of the silicon-based particles, and the mixture was heat-treated in an inert atmosphere and at a temperature of 800°C to prepare Li-doped silicon-based particles, which processes were performed in the same manner as in Example 1. Then, 5g of pitch was added when mixing 1.5 g of Al(PO₃)₃ with 98.5 g of the silicon-based particles, and the mixture was heat-treated at 600°C, whereby a negative electrode active material was prepared in which the first coating layer including Li, Al, P, and C was formed on the surfaces of the silicon-based particles.

Thereafter, heat treatment was performed in an argon gas atmosphere and 700°C for 20 minutes to prepare a negative electrode active material.

**[Table 1]**

| | Based on 100 parts by weight of negative electrode active material | | | | Based on first coating layer | Based on 100 parts by weight of negative electrode active material | | Based on sum of first coating layer and second coating layer | Based on second coatin g layer |
|---|---|---|---|---|---|---|---|---|---|
| | Cont ent of Li | Conten t of Al | Content of P | Content of C | Content of O | Content of first coating layer | Conte nt of secon d coati ng layer | Carbon: Li+Al+P+O | Carbon Li+Al+ P+O |
| Example 1 | 9.5 | 0.15 | 0.5 | 5.0 | 0.85 | 1.43 (Li-Al-P-O coating) | 5.07 (carb on+Li -AlP-O coati ng) | 0.77:0.23 | 1.0:0. 014 |
| Example 2 | 9.0 | 0.5 | 1.8 | 5.0 | 2.7 | 4.75 (Li-Al-P-O coating) | 5.25 (carb on+Li -AlP-O coati ng) | 0.5:0.5 | 1.0:0. 05 |
| Example 3 | 9.5 | 0.05 | 0.18 | 5.0 | 0.27 | 0.475 (Li-Al-P-O coating) | 5.025 (carb on+Li -AlP-O coati ng) | 0.91:0.09 | 1.0:0. 005 |
| Comparati ve Example 1 | 9.5 | 0.15 | 0.5 | 4.4 | 0.85 | 4.4 (carbon coating) | 1.5 (Li-Al-P-O coati ng) | 0.75:0.25 | - |
| Comparati ve Example 2 | 9.0 | 1.0 | 3.0 | 4.1 | 6.0 | 4.1 (carbon coating) | 10 (Li-Al-P-O coati ng) | 0.29:0.71 | - |
| Comparati ve Example 3 | 9.85 | 0.15 | 0.53 | 0 | 0.82 | 1.5 (Li-Al-P-O coating) | - | - | - |
| Comparati ve Example 4 | 9.5 | 0.15 | 0.5 | 5 | 0.85 | 6.5 (carbon+L i-Al-P-O coating) | - | 0.77:0.23 | - |

The contents of elements were confirmed by ICP analysis using an inductively coupled plasma atomic emission spectrometer (ICP-OES, AVIO 500 of Perkin-Elmer 7300) .

The D₅₀ of the negative electrode active material was analyzed by a PSD measurement method using a Microtac apparatus.

The specific surface area was measured by degassing gas 200°C for 8 hours using a BET measuring apparatus (BEL-SORP-MAX, Nippon Bell), and performing N₂ adsorption/desorption at 77 K.

### <Experimental Example: Evaluation of discharge capacity, initial efficiency, and life (capacity retention rate) characteristics>

A negative electrode and a battery were prepared using the negative electrode active materials of Examples and Comparative Examples, respectively.

A mixture was prepared by mixing the negative electrode active material, carbon black as a conductive material, and polyacrylic acid (PAA) as a binder in a weight ratio of 80:10:10. Thereafter, 7.8 g of distilled water was added to 5 g of the mixture, which was then stirred to prepare a negative electrode slurry. The negative electrode slurry was applied to a copper (Cu) metal thin film as a negative electrode current collector having a thickness of 20 um, and dried. In this case, the temperature of the circulating air was 60°C. Then, the thin film was roll-pressed and dried at 130°C for 12 hours in a vacuum oven to prepare a negative electrode.

A lithium (Li) metal thin film obtained by cutting the prepared negative electrode into a circular shape of 1.7671 cm² was used as a positive electrode. A porous polyethylene separator was interposed between the positive electrode and the negative electrode, and an electrolyte solution obtained by dissolving vinylene carbonate to 0.5 part by weight in a mixed solution in which ethyl methyl carbonate (EMC) and ethylene carbonate (EC) were mixed in a volume ratio of 7:3, and dissolving LiPF₆ to a concentration of 1M was injected to manufacture a lithium coin half-cell.

The prepared batteries were charged and discharged to evaluate discharge capacity, initial efficiency, and capacity retention rate, which are shown in Table 2 below.

The charging and discharging were performed at 0.1C for the first cycle and the second cycle, and the charging and discharging were performed at 0.5C from the third cycle to the 49th cycle. At the 50th cycle, the charging and discharging were terminated in a charge state (with lithium contained in the negative electrode).
Charging conditions: CC (constant current)/CV (constant voltage) (5mV/0.005C current cut-off)
Discharging conditions: CC (constant current) condition 1.5V

The discharge capacity (mAh/g) and the initial efficiency (%) were derived from the result after charging and discharging once. Specifically, the initial efficiency (%) was derived by the following calculation. Initial efficiency (%) = (first discharge capacity/first charge capacity)×100

The capacity retention rate was derived by the following calculation. Capacity retention rate (%) = (49th discharge capacity/first discharge capacity)×100

### <Experimental Example: Evaluation of shear viscosity characteristics>

As part of the evaluation of processability, the change in shear viscosity at shear rate (= 1 Hz) of the slurry prepared by mixing graphite, negative electrode active material, carbon black, CMC and SBR at a weight ratio of 77:20:1:1:1 was measured and shown in Table 2 below. Specifically, the change (%) in shear viscosity was derived by the following calculation formula. change (%) in shear viscosity = ((shear viscosity of slurry after 48h - shear viscosity of slurry immediately after mixing) / shear viscosity of slurry immediately after mixing) × 100

**[Table 2]**

| Battery | Discharge capacity (mAh/g) | Initial efficiency (%) | Capacity retention rate (%) | Change (%) in shear viscosity |
|---|---|---|---|---|
| Example 1 | 1370 | 90.5 | 45 | 30 |
| Example 2 | 1350 | 90.2 | 43 | 35 |
| Example 3 | 1360 | 90.3 | 44 | 35 |
| Comparativ e Example 1 | 1330 | 90 | 40 | 40 |
| Comparativ e Example 2 | 1325 | 90 | 37 | 37 |
| Comparativ e Example 3 | 1200 | 90 | 25 | 60 |
| Comparativ e Example 4 | 1300 | 90 | 35 | 50 |

The negative electrode active material according to the present invention has a structure in which a layer including Li, Al, P, and O is coated closer on silicon-based particles than the carbon layer. It could be confirmed that Examples 1 to 3 using the negative electrode active material of the present invention had excellent discharge capacity, initial efficiency and capacity retention rate, and the shear viscosity of the slurry was significantly low, exhibiting excellent processability. This appears to be because the layer including Li, Al, P, and O and located close to the surface of the silicon-based particle can easily prevent the reaction with moisture in the slurry; the hydrophobic carbon layer is present at the outermost layer to additionally block contact between the negative electrode active material and moisture, improving the aqueous processability of slurry; and highly conductive carbon is present at the outermost layer, which has an advantageous effect in implementing overall capacity/efficiency.

On the other hand, in Comparative Examples 1 and 2, it could be confirmed that since a carbon layer was coated closely as a first coating layer on the silicon-based particles, and a layer including Li, Al, P, and O was coated on the first coating layer, it was difficult to remove the lithium by-product generated when doping the silicon-based particles with Li, and since the carbon layer was not present at the outermost layer, side reactions easily occurred within the slurry, making it difficult to implement processability of the slurry and capacity/efficiency of the battery.

In addition, Comparative Example 3 corresponds to the case where the layer including Li, Al, P, and O is coated on the silicon-based particles as a single layer without a second coating layer (carbon layer), and Comparative Example 4 corresponds to the case where a single layer (a layer including Li, Al, P, O, and C) including the material of the first coating layer and the material of the second coating layer is coated without distinction between the first coating layer and the second coating layer. In Comparative Examples 3 and 4, it could be confirmed that a single layer was formed, so contact between the negative electrode active material and water occurred easily, making the processability of the slurry and the capacity/efficiency of the battery inferior to those of Comparative Examples 1 and 2.

Therefore, the present invention provides a negative electrode active material including a silicon-based particles a first coating layer including Li, Al, P, and O; and a second coating layer including carbon, thereby significantly improving the overall aqueous processability, discharge capacity, efficiency, and capacity retention rate.

## Claims

1. A negative electrode active material comprising:
a silicon-based particle comprising SiOx (0<x<2) and a Li compound;
a first coating layer provided on at least a portion of the silicon-based particle; and
a second coating layer provided on at least a portion of the first coating layer,
wherein the first coating layer comprises Li, Al, P, and O, and
wherein the second coating layer comprises carbon.

2. The negative electrode active material of claim 1,
wherein the second coating layer further comprises Li, Al, P, and O.

3. The negative electrode active material of claim 1, wherein the first coating layer comprises a phase of Li_{y}Al_{z}P_{w}Oᵥ (0<y≤10, 0<z≤10, 0<w≤10, 0<v≤10).

4. The negative electrode active material of claim 1, wherein the first coating layer comprises one or more selected from the group consisting of aluminum oxide, phosphorous oxide, lithium oxide, aluminum phosphate, lithium salt, lithium phosphate, and lithium aluminate.

5. The negative electrode active material of claim 1,
wherein the second coating layer further comprises a phase of Li_{y}Al_{z}P_{w}Oᵥ (0<y≤10, 0<z≤10, 0<w≤10, 0<v≤10).

6. The negative electrode active material of claim 1,
wherein a content of carbon is 45 parts by weight or more and 95 parts by weight or less based on a total of 100 parts by weight of the first coating layer and the second coating layer.

7. The negative electrode active material of claim 1,
wherein a weight of carbon exceeds 70 parts by weight based on 100 parts by weight of the second coating layer.

8. The negative electrode active material of claim 1,
wherein the first coating layer is provided adjacent to the silicon-based particle.

9. The negative electrode active material of claim 1,
wherein the second coating layer is provided at an outermost layer of the negative electrode active material.

10. The negative electrode active material of claim 1,
wherein the second coating layer is an amorphous carbon layer.

11. The negative electrode active material of claim 3, wherein the phase of Li_{y}Al_{z}P_{w}Oᵥ (0<y≤10, 0<z≤10, 0<w≤10, 0<v≤10) is comprised in an amount of more than 8 parts by weight and 50 parts by weight or less on the basis of a total of 100 parts by weight of the negative electrode active material.

12. The negative electrode active material of claim 1,
wherein the second coating layer is included in an amount of 0.1 part by weight or more and 50 parts by weight or less on the basis of a total of 100 parts by weight of the negative electrode active material.

13. The negative electrode active material of claim 1,
wherein Li is comprised in an amount of 0.1 part by weight or more and 40 parts by weight or less on the basis of a total of 100 parts by weight of the negative electrode active material.

14. A method for manufacturing the negative electrode active material of any one of claims 1 to 13, the method comprising:
manufacturing a preliminary silicon-based particle comprising SiOx (0<x<2);
mixing the preliminary silicon-based particle and a Li precursor, and heat-treating the mixture to manufacture a silicon-based particle;
providing a first coating layer by mixing and reacting the silicon-based particle with one or more selected from the group consisting of an Al precursor, a P precursor, and a precursor including Al and P; and
forming a second coating layer from a carbon precursor on the silicon-based particle provided with the first coating layer.

15. A method for manufacturing the negative electrode active material of any one of claims 1 to 13, the method comprising:
manufacturing a preliminary silicon-based particle comprising SiOx (0<x<2);
mixing the preliminary silicon-based particle and a Li precursor, and heat-treating the mixture to manufacture a silicon-based particle; and
mixing the silicon-based particle with one or more selected from the group consisting of an Al precursor, a P precursor, and a precursor including Al and P, and a carbon source, and heat-treating the mixture.

16. A negative electrode comprising the negative electrode active material of any one of claims 1 to 13.

17. A secondary battery comprising the negative electrode of claim 16.
